# FASCICULE DE BREVET EUROPEEN

(11) **EP 2 067 658 B1**
(45) Date de publication et mention de la délivrance du brevet: **16.02.2011**
(21) Numéro de dépôt: 08170573.3
(22) Date de dépôt: 03.12.2008
(51) Int. Cl.: B60P 3/39

(54) **Agencement d'un ensemble de couchage pour véhicule à cadre de sommier amovible**
Anordnung einer Schlafgelegenheit für Fahrzeug mit entfernbarem Bettrahmen
Arrangement of a sleeping system for a vehicle with a removable bedspring frame

(30) Priorité: 06.12.2007 FR 0759615
(43) Date de publication de la demande: 10.06.2009
(73) Titulaire: TrIgano s.p.a, 53037 San Gimignano (IT)
(72) Inventeur: Calderoni, Giorgio, 50125, FIRENZE (IT); Job, Guy, 26800, Etoile sur Rhône (IT)
(74) Mandataire: Kohn, Philippe

(56) Documents cités:
- EP-A- 1 829 742
- DE-A1- 3 932 756
- DE-U- 1 667 343
- DE-U1- 29 605 258
- DE-U1-202004 000 608
- GB-A- 132 252
- GB-A- 160 044

## Description

L'invention propose agencement d'un ensemble de couchage dans un compartiment de véhicule automobile, comportant un sommier dont une partie est escamotable.

L'invention propose plus particulièrement un agencement d'un ensemble de couchage dans un compartiment de véhicule automobile, qui comporte un sommier horizontal comportant au moins deux cadres alignés transversalement, et qui sont montés sur des éléments inférieurs de support agencés à chaque extrémité transversale du sommier, un cadre du sommier étant mobile par rapport à l'au moins un autre cadre du sommier et par rapport aux éléments de support entre une position horizontale dans laquelle il est en appui sur chaque élément de support, et au moins une position de rangement dans laquelle le cadre mobile s'étend globalement dans un plan longitudinal vertical.

Le document DE-U1-202006009505 décrit un tel agencement d'un ensemble de couchage dans un véhicule automobile utilitaire du type "camionnette" ou "camping-car", qui est destiné à offrir un espace de couchage dans le compartiment arrière du véhicule.

L'accès au compartiment arrière du véhicule s'effectue par une ouverture aménagée dans la paroi transversale arrière du véhicule et par un passage entre les éléments de support de l'ensemble de couchage, qui débouche dans cette ouverture arrière.

Pour permettre la circulation d'une personne dans le compartiment entre les éléments de support, le sommier de l'ensemble de couchage est réalisé en plusieurs parties, ou cadres, parmi lesquels un cadre est monté mobile par rapport aux autres cadres et par rapport aux éléments de support du sommier.

L'ensemble de couchage comporte aussi un matelas qui est réalisé en plusieurs parties, et il comporte lui aussi une partie mobile qui est associée au cadre mobile, pour un déplacement dans le compartiment du véhicule.

Selon ce document, le cadre mobile est monté articulé par rapport aux éléments de support autour d'un axe parallèle à la direction longitudinale du véhicule, entre une position horizontale d'utilisation, et une position relevée sensiblement longitudinale verticale.

Ainsi, pour déplacer le cadre mobile et la partie mobile associée du matelas vers la position relevée, il faut produire un effort relativement important correspondant à la masse du cadre mobile et de la partie mobile du matelas.

De plus, lorsque le cadre est dans la position relevée, l'utilisateur doit maintenir le cadre dans cette position et manipuler simultanément des moyens de maintien du cadre dans cette position.

Une telle manipulation est relativement difficile à réaliser à cause du poids de l'ensemble à manipuler, et à cause de l'espace restreint du compartiment dans lequel l'utilisateur se situe.

Le document GB-A-160.044 décrit un agencement d'un ensemble de couchage dans un compartiment de véhicule automobile comportant deux cadres qui sont posés sur des éléments de support formés par la structure du véhicule. L'un des deux cadres est apte à être déplacé par rapport aux éléments de support vers une position de rangement dans laquelle ledit cadre d'étend dans un plan vertical transversal, pour former un élément d'assise, conjointement avec l'autre cadre.

Selon ce document, les deux cadres sont indépendants, et ils sont distants transversalement l'un de l'autre lorsqu'ils sont en position horizontale. Ainsi, les deux cadres forment deux éléments de couchage indépendants, laissant subsister entre eux une partie du passage entre les éléments de support.

Le document EP-A-1.829.742 décrit un agencement d'un ensemble de couchage dans un compartiment de véhicule automobile qui comporte un sommier horizontal composé de deux cadres alignés transversalement et qui sont montés sur des éléments de support. Le sommier comporte un cadre qui est monté mobile par rapport à l'autre cadre entre une position horizontale de repos et une position de rangement dans laquelle le cadre mobile s'étend dans un plan longitudinal vertical.

Selon ce document, le cadre mobile est monté pivotant par rapport à l'autre cadre, c'est-à-dire qu'il est lié en permanence avec le cadre fixe et avec les moyens de support.

Le document DE-U-20.2004.000608 décrit un agencement d'un ensemble de couchage dans un compartiment de véhicule automobile qui comporte un sommier horizontal composé de deux cadres alignés transversalement et qui sont montés sur des éléments de support. Chaque cadre comporte une partie fixe et une partie mobile qui est montée articulée autour d'un axe longitudinal par rapport à la partie fixe entre une position déployée et une position rangée dans laquelle la partie fixe et la partie mobile sont imbriquées l'une avec l'autre, formant un élément horizontal.

Ainsi, selon ce document, la partie mobile est constamment liée à la partie fixe, et elle s'étend horizontalement lorsqu'elle est dans sa position de rangement.

Le document DE-U-16.67.343 décrit un agencement d'un ensemble de couchage dans un compartiment de véhicule automobile qui comporte un sommier horizontal composé d'au moins deux cadres alignés transversalement et qui sont montés sur des éléments de support.

Selon ce document, les cadres du sommier sont démontables. Cependant, ce document ne décrit pas de position de rangement du cadre mobile.

Le document GB-A-132.252 décrit un agencement d'un ensemble de couchage dans un compartiment de véhicule automobile qui comporte un sommier horizontal composé d'au moins deux cadres alignés transversalement et qui sont montés sur des éléments de support.

Au moins un des cadres est monté mobile par rapport aux éléments de support entre une position déployée horizontale et une position de rangement verticale.

Selon ce document, le cadre mobile est relié aux éléments de support par des bras articulés, il ne peut donc pas être désolidarisé d'avec les éléments de support.

L'invention a pour but de proposer un agencement d'un ensemble de couchage pour lequel le déplacement du cadre mobile est relativement aisé, et permettant un déplacement aisé dans le compartiment du véhicule.

Dans ce but, l'invention propose un agencement tel que décrit précédemment, caractérisé en ce que le cadre mobile est apte à être désolidarisé entièrement des éléments de support pour son déplacement entre la position horizontale et la position de rangement, et/ou pour son déplacement entre la position horizontale et une position démontée de rangement hors du véhicule, et en ce que le cadre mobile est monté sur une paroi supérieure horizontale d'un élément de support lorsqu'il est en position de rangement, cette paroi portant au moins un crochet (48) qui est ouvert vers le haut et qui est apte à recevoir une extrémité du cadre mobile lorsque le cadre mobile est dans sa position de rangement.

Selon d'autres caractéristiques de l'invention, prises isolément ou en combinaison :
- le cadre mobile est apte à être désolidarisé des éléments de support par un premier mouvement consistant à soulever le cadre mobile, puis à être déplacé vers sa position de rangement par un deuxième mouvement d'engagement du cadre mobile dans des moyens de maintien du cadre dans la position de rangement ;
- lors de son déplacement vers la position de rangement, le cadre mobile est basculé globalement autour d'un axe longitudinal ;
- lors de son déplacement vers la position de rangement, le cadre mobile est déposé dans les moyens de maintien postérieurement à son basculement ;
- un élément de support porte les moyens de maintien du cadre mobile dans sa position de rangement ;
- le cadre mobile est accolé contre une paroi longitudinale verticale dudit élément de support lorsqu'il est en position de rangement ;
- les moyens de maintien comportent au moins une plaque longitudinale verticale qui est décalée transversalement par rapport à ladite paroi longitudinale verticale de l'élément de support ;
- la plaque est agencée au niveau d'un coin inférieur de la paroi longitudinale verticale de l'élément de support et s'étend verticalement vers le haut depuis le plancher du compartiment ;
- les moyens de maintien comportent deux plaques longitudinales verticales agencées au niveau de chaque coin inférieur de la paroi longitudinale verticale ;
- la plaque longitudinale verticale est reliée à l'élément de support par une aile transversale verticale qui est fixée à une paroi verticale transversale de l'élément de support ;
- le cadre mobile est maintenu en position de rangement par les moyens de maintien ;
- le cadre mobile est maintenu en position de rangement par des moyens d'accrochage ;
- ledit crochet s'étend longitudinalement globalement sur la longueur du bord d'extrémité transversale interne de la paroi supérieure ;
- ladite extrémité du cadre mobile est articulée par rapport audit au moins un crochet autour d'un axe longitudinal, pour déplacer directement le cadre mobile depuis la position de repos vers la position de rangement ;
- ladite extrémité du cadre mobile porte une barre longitudinale qui est reçue à rotation dans ledit au moins un crochet pour réaliser l'articulation du cadre mobile par rapport à l'élément de support et ladite barre longitudinale est apte à être sortie hors dudit au moins un crochet pour la désolidarisation du cadre mobile d'avec l'élément de support ;
- ladite barre longitudinale porte au moins un doigt radial par rapport à l'axe longitudinal, et qui coopère avec au moins une rainure réalisée dans ledit au moins un crochet, ladite rainure s'étendant dans un plan radial par rapport audit axe longitudinal ;
- ledit au moins un doigt est apte à venir en butée conte une extrémité de la rainure lorsque le cadre mobile est en position de rangement ;
- ledit au moins un doigt est monté coulissant dans un logement radial réalisé dans la barre longitudinale, et est apte à s'effacer radialement à l'intérieur dudit logement radial ;
- la barre comporte plusieurs doigts répartis longitudinalement le long de la barre, et ledit au moins un crochet comporte un nombre de rainures identique au nombre de doigts ;
- l'élément de support porte plusieurs crochets dont le nombre de crochets est identique au nombre de doigts portés par la barre, et chaque crochet comporte une rainure qui est apte à recevoir l'un des doigts ;
- l'agencement présente une symétrie selon un plan longitudinal vertical médian du compartiment arrière.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective avec arrachement du compartiment arrière d'un véhicule automobile comportant un ensemble de couchage selon l'invention, pour lequel le cadre mobile est en position horizontale d'utilisation ;
- la figure 2 est une vue similaire à celle de la figure 1, montrant l'ensemble de couchage en position d'utilisation et pour lequel le matelas a été enlevé ;
- la figure 3 est une vue similaire à celle de la figure 1, montrant le cadre mobile et la partie mobile du matelas en position de rangement ;
- la figure 4 est une vue arrière du véhicule représenté à la figure 1 ;
- la figure 5 est une vue arrière du véhicule représenté à la figure 3 ;
- la figure 6 est une vue similaire du véhicule représenté à la figure 3, montrant un autre mode de réalisation de l'invention selon lequel le cadre mobile est porté par un élément de maintien ;
- la figure 7 est une vue arrière du véhicule représenté à la figure 6 ;
- la figure 8 est un détail à plus grande échelle d'un crochet de maintien du cadre mobile représenté à la figure 7 ;
- la figure 9 est une vue similaire à celle de la figure 6, montrant un autre mode de réalisation de l'invention selon lequel le cadre mobile comporte une barre longitudinale d'articulation ;
- la figure 10 est une section suivant un plan vertical transversal et à plus grande échelle de la barre longitudinale et d'un crochet lorsque le cadre mobile est en position de repos ;

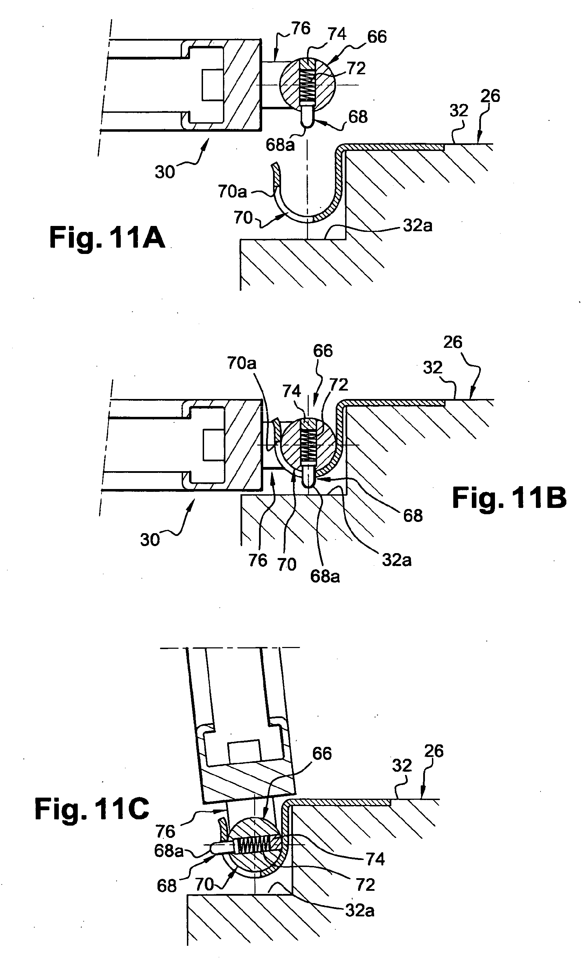

- la figure 11 est une section similaire à celle de la figure 10, pour laquelle le cadre mobile est en position de rangement.

Pour la description de l'invention, on adoptera à titre non limitatif les orientations verticale, longitudinale et transversale selon le repère V, L, T indiqué aux figures.

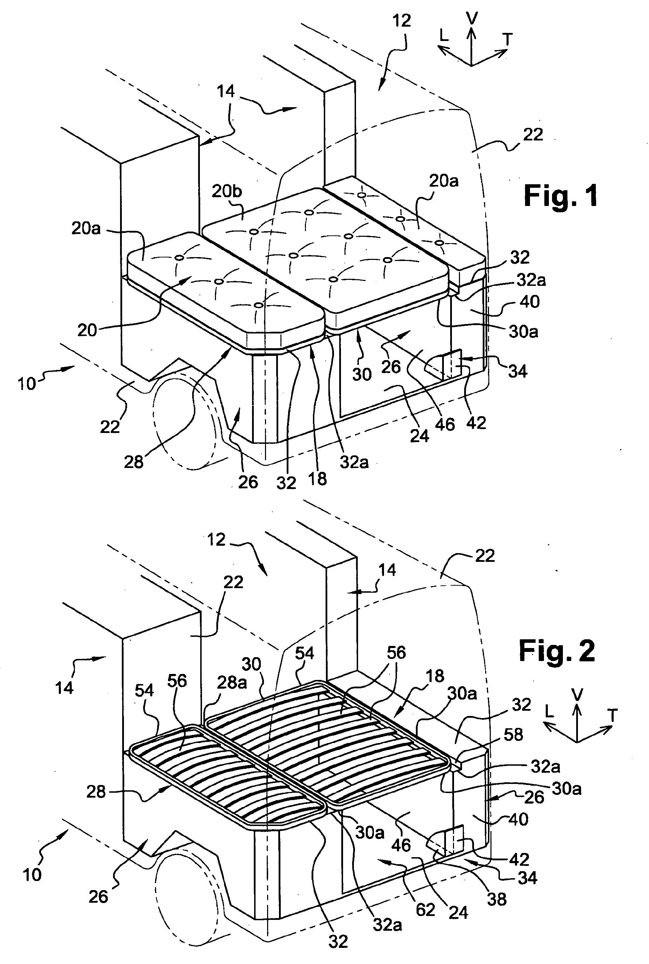

On adoptera aussi l'orientation d'avant en arrière comme étant la direction longitudinale et de droite à gauche en se reportant à la figure 1.

Dans la description qui va suivre, des éléments identiques, similaires ou analogues seront désignés par les mêmes chiffres de référence.

On a représenté aux figures 1 et 2 la partie arrière d'un véhicule automobile 10 qui est un véhicule du type camionnette, ou camping-car, dont le compartiment 12 situé en arrière du poste de conduite a été aménagé pour recevoir divers éléments de confort.

Ces éléments de confort comportent des éléments de rangement 14, et un ensemble de couchage 16 aménagé à l'extrémité arrière du compartiment 12.

L'ensemble de couchage 16 comporte un sommier 18, ici un sommier à lattes, et un matelas 20 posé sur le sommier 18.

L'ensemble de couchage 16 est orienté transversalement dans le compartiment 12, c'est-à-dire que sa longueur, ou grande dimension, est mesurée transversalement, et sa largeur, ou petite dimension est mesurée longitudinalement.

De plus, ici, la longueur de l'ensemble de couchage 16 est sensiblement égale à la dimension transversale du compartiment 12, c'est-à-dire qu'il s'étend transversalement entre les deux parois latérales 22 du compartiment 12.

L'ensemble de couchage 16 est situé verticalement au dessus du plancher 24 du compartiment 12. Pour cela, le sommier 18 est porté par deux éléments de support 26 qui sont situés à chaque extrémité transversale de l'élément de couchage 16.

De préférence, les éléments de support 26 sont réalisés de manière à avoir le même aspect que les éléments de rangement 14, et selon une variante, au moins un élément de support 26 forme un espace de rangement.

Les éléments de support 26 peuvent aussi être des composants de structure simple, par exemple des composants à claire-voie.

L'ensemble de couchage 16 est escamotable en partie, pour permettre le déplacement d'une personne dans le passage 62 délimité par les deux éléments de support 26.

Pour cela, le sommier 18 et le matelas 20 sont tous les deux réalisés en plusieurs parties, dont certaines sont mobiles, pour dégager le passage 62 entre les éléments de support 26.

Le matelas 20 est réalisé en trois parties, il comporte deux parties d'extrémité longitudinale 20a, dont chacune est montée dessus un élément de support 26, et une partie centrale 20b transversale qui s'étend au travers du passage 62 entre les éléments de support 26.

Le sommier est ici réalisé en deux parties, il comporte ici deux cadres 28, 30 placés sur les éléments de support 26 et qui sont alignés transversalement.

Ainsi, selon le mode de réalisation représenté aux figures, les trois parties 20a, 20b du matelas 20 sont portées par les deux cadres 28, 30 du sommier 18 et par un élément de support 26.

Le sommier 18 est ici un sommier du type à lattes, chacun des deux cadres 28, 30 comporte ainsi une armature périphérique 54 rectangulaire réalisée à partir de tubes profilés métalliques et des lattes 56 qui sont ici orientées transversalement.

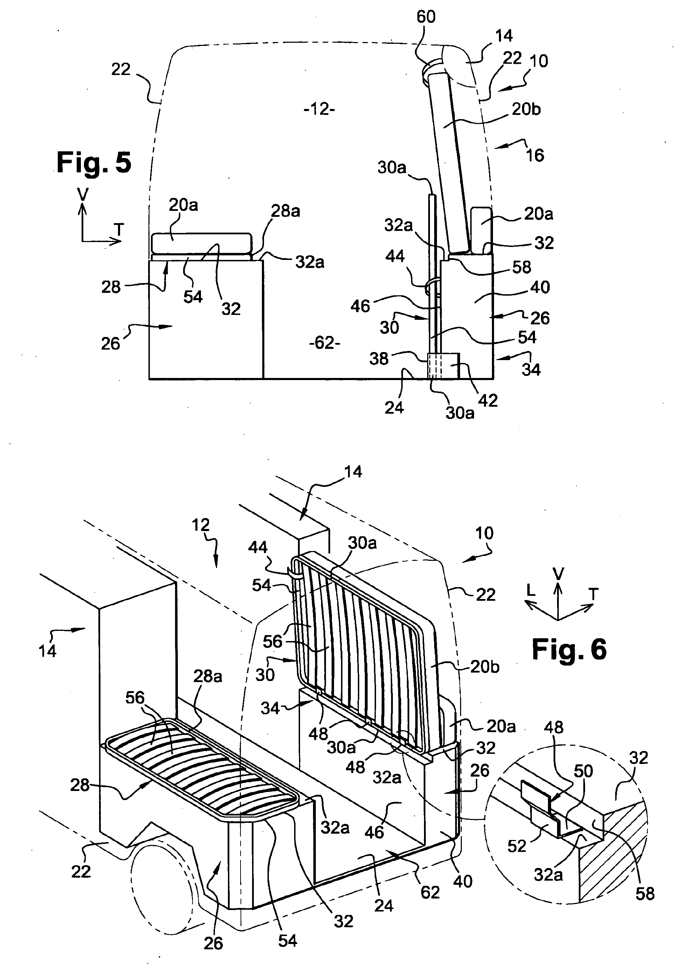

Ici, comme on peut le voir à la figure 6, les profilés métalliques sont de section rectangulaire et ils sont orientés de manière que la grande dimension de leur section est verticale lorsque les cadres 28, 30 sont en position horizontale, pour procurer au sommier 18 une plus grande rigidité. La petite dimension de la section des profilés est alors horizontale.

Il sera compris que l'invention n'est pas limitée à ce mode de réalisation des profilés métalliques, qui peuvent avoir une autre section, par exemple une section carrée ou circulaire, ou ovale. Les profilés peuvent aussi être d'un autre matériau, ils peuvent être réalisés en bois ou en matériau composite de faible poids.

De plus, le sommier 18 peut être un sommier d'un autre type. Par exemple, chaque cadre 28, 30 du sommier peut consister en une planche en bois ou tout autre matériau convenant à cette utilisation.

Un premier cadre 28, ici celui de gauche, porte une partie d'extrémité 20a du matelas 20, et il est fixé sur une paroi supérieure horizontale 32 de l'élément de support 26 associé, c'est-à-dire ici l'élément de support 26 situé à gauche du compartiment 12, ce premier cadre 28 sera appelé par la suite cadre fixe.

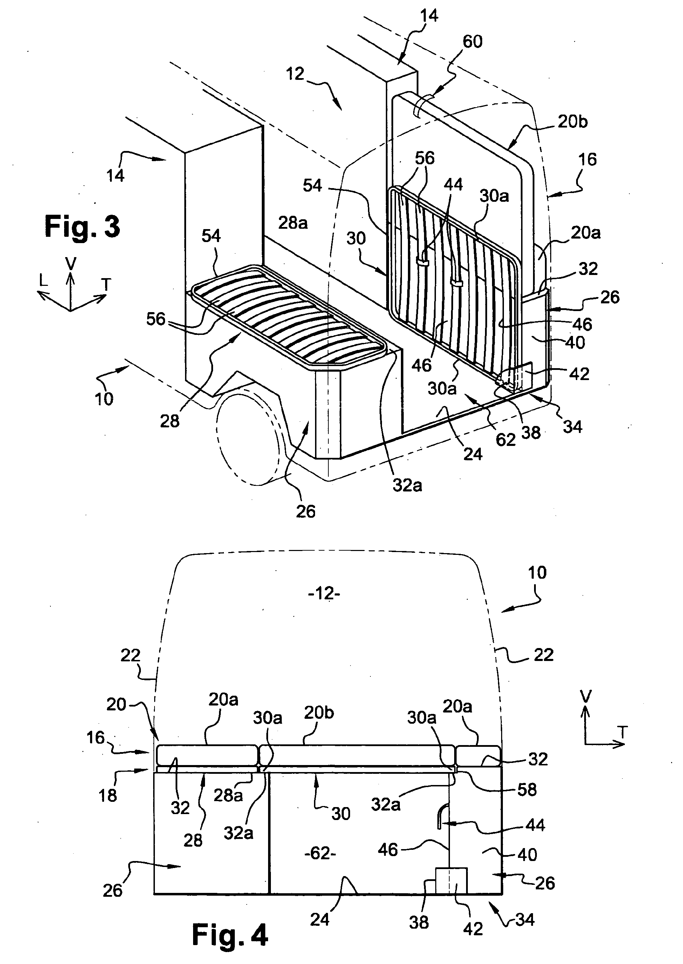

Ici, comme on peut le voir aux figures 4 et 5, le cadre fixe 28 s'étend transversalement vers la droite depuis la paroi latérale 22 de gauche du compartiment, et son bord longitudinal d'extrémité droite 28a est situé transversalement en retrait par rapport au bord 32a d'extrémité transversale de droite de la paroi supérieure 32 de l'élément de support 26 de gauche.

Le deuxième cadre 30 est agencé transversalement globalement au centre du compartiment 12, et ses deux extrémités transversales 30a sont posées sur les bords d'extrémité transversale interne 32a en vis-à-vis des parois supérieures 32 des deux éléments de support 26.

Le deuxième cadre 30 s'étend donc en travers du passage 62 délimité par les deux éléments de support 26.

Le deuxième cadre 30 porte la partie centrale 20b du matelas.

Enfin, comme on l'a dit plus haut, la deuxième partie d'extrémité 20a du matelas 20 est portée par un élément de support 26, ici l'élément de support 26 situé à droite aux figures.

La paroi supérieure 32 de cet élément de support 26 est par conséquent située verticalement au niveau des cadres 28, 30 du sommier 18.

Selon une variante de réalisation non représentée, le sommier 18 est réalisé en trois parties, de manière similaire aux trois parties du matelas 20.

Le sommier 18 comporte alors deux cadres fixes 28 dont chacun est porté par la paroi supérieure 32 d'un élément de support 26, et un cadre central 30 dont deux extrémités transversales 30a sont posées sur les bords d'extrémité transversale interne 32a en vis-à-vis des parois supérieures 32 des deux éléments de support 26.

Chaque cadre fixe 28 est alors apte à porter une partie d'extrémité 20a du matelas et le cadre central 30 est apte à porter la partie centrale 20b du matelas 20.

Comme on l'a dit plus haut, pour dégager ce passage 62, le deuxième cadre 30 est monté mobile par rapport aux éléments de support 26 et par rapport au cadre fixe 28, entre une position horizontale d'utilisation représentée à la figure 1, dans laquelle il repose sur les éléments de support 26, et une position de rangement représentée à la figure 2, dans laquelle le deuxième cadre 30 ne s'étend pas en travers du passage 62.

Dans la description qui va suivre, le deuxième cadre 30 sera désigné par cadre mobile 30.

Comme on l'a dit plus haut, la paroi supérieure 32 de l'élément de support 26 situé à l'autre extrémité du sommier 18, ici à l'extrémité de droite du sommier 18, est situé verticalement le même plan horizontal que la face supérieure horizontale du sommier 18.

Le bord 32a transversal interne de la paroi supérieure 32, sur lequel le bord longitudinal 30a de droite du cadre mobile 30, est situé verticalement en retrait vers le bas par rapport au reste de la paroi supérieure 32. La paroi supérieure 32 comporte en outre une face longitudinale verticale 58 qui relie le bord transversal interne 32a de la paroi supérieure 32 au reste de la paroi supérieure 32.

Conformément à l'invention, le cadre mobile 30 est apte à être désassemblé d'avec le ou les cadres fixes 28 et d'avec les deux éléments de support 26 pour son déplacement entre la position d'utilisation et la position de rangement.

Ainsi, le déplacement du cadre mobile 30 est facilité pour l'utilisateur, dont les mouvements ne sont contraints ou limités par aucun composant reliant constamment le cadre mobile 30 avec un élément fixe.

Selon un autre aspect de l'invention, le déplacement du cadre mobile 30 depuis sa position horizontale s'effectue en deux mouvements consécutifs.

Le premier mouvement du cadre mobile 30 est un mouvement de désolidarisation du cadre mobile d'avec les éléments de support 26 et d'avec le cadre fixe 28, qui consiste à soulever le cadre mobile 30 verticalement vers le haut par rapport aux éléments de support 26.

A cet effet, pour faciliter ce premier mouvement, le cadre mobile 30 est posé sur les éléments de support 26 à chacune de ses extrémités 30a, sans moyens pour bloquer verticalement chaque extrémité 30a du cadre mobile 30.

Le deuxième mouvement du cadre mobile 30 consiste à orienter le cadre mobile 30 par un pivotement du cadre mobile 30 autour d'un axe longitudinal, pour qu'il s'étende dans un plan globalement longitudinal vertical et à engager une extrémité 30a du cadre mobile 30 dans des moyens 34 de maintien du cadre mobile 30.

Ces moyens de maintien 34 sont réalisés de manière à recevoir l'extrémité 30a du cadre mobile 30 située verticalement en bas du cadre mobile 30, et de manière que cette extrémité 30a est engagée selon un déplacement globalement vertical vers le bas.

Conformément à l'invention, le cadre mobile 30 peut aussi être déposé hors du véhicule 10, permettant ainsi de dégager entièrement le compartiment arrière 12 du véhicule 10.

Il n'y a alors qu'un mouvement de désolidarisation du cadre mobile d'avec les éléments de support 26 et d'avec le cadre fixe 28, comme décrit précédemment.

Il est alors possible d'utiliser le véhicule 10 sans l'équiper du couchage arrière 16, les parties 20a, 20b du matelas 20 et le cadre mobile 30 sont ainsi entreposés provisoirement dans un garage par exemple.

Seul le cadre fixe 28, ou les cadres fixes 28 selon la variante de réalisation non représentée, reste alors dans le compartiment arrière 12 du véhicule 10.

On a représenté aux figures 1 à 5 un premier mode de réalisation de l'invention selon lequel le cadre mobile 30 est accolé contre une paroi longitudinale verticale 46 d'un élément de support 26, qui est située transversalement en vis-à-vis de l'autre élément de support 26, lorsqu'il est en position de rangement.

Ici, le cadre mobile 30 est accolé contre la paroi 46 de l'élément de support 26 situé à droite dans le compartiment 12, que l'on désignera par la suite paroi de maintien 46.

Les moyens de maintien 34 comportent une plaque longitudinale verticale 38 qui est agencée au niveau du coin inférieur arrière de la paroi de maintien 46 et qui est décalée transversalement par rapport à la paroi de maintien 46, de sorte que le cadre mobile 30 est reçu entre la paroi de maintien 46 et la plaque 38.

Chaque plaque 38 est reliée à une paroi verticale transversale 40 associée de l'élément de support 26 par l'intermédiaire d'une aile verticale transversale 42 qui s'étend transversalement vers la paroi latérale 22 du compartiment 12.

De préférence, la plaque 38 et l'aile 42 sont deux parties d'une même pièce.

Ainsi, comme on peut le voir plus en détails à la figure 3, la plaque 38 s'étend longitudinalement vers l'avant depuis l'aile transversale 42 qui prolonge transversalement la paroi transversale 40 associée, et la plaque 38 s'étend verticalement vers le haut depuis le plancher 24 du compartiment 12.

Selon une variante de réalisation non représentée, l'extrémité transversale interne 40a de la paroi transversale 40 fait saillie transversalement vers l'intérieur de l'habitacle par rapport à la paroi de maintien 46, et la plaque 38 est reliée directement à l'extrémité interne de la paroi transversale 40.

Selon une autre variante de réalisation non représentée, les moyens de maintien 34 comportent deux plaques 38 qui sont agencées au niveau des deux coins inférieurs de la paroi de maintien 46.

Selon encore une autre variante de réalisation des moyens de maintien 34, la plaque 38 forme un profilé longitudinal qui s'étend longitudinalement sur toute la dimension longitudinale du cadre mobile.

La plaque 38 forme par exemple un profilé en "L" dont la base horizontale est fixée au plancher 24 du compartiment 12.

On a représenté aux figures 6 à 8 un deuxième mode de réalisation de l'invention selon lequel les moyens de maintien 34 du cadre mobile 30 sont agencés sur le bord d'extrémité transversal interne 32a de la paroi supérieure 32 d'un élément de maintien 26. Ainsi, lorsque le cadre mobile 30 est en position de rangement, il s'étend vers le haut depuis le bord d'extrémité transversal interne 32a de la paroi supérieure 32.

Les moyens de maintien 34 comportent des crochets 48, ici au nombre de trois, qui sont montés sur le bord interne 32a de la paroi supérieure 32 et qui sont répartis longitudinalement le long du bord interne 32a de la paroi supérieure 32.

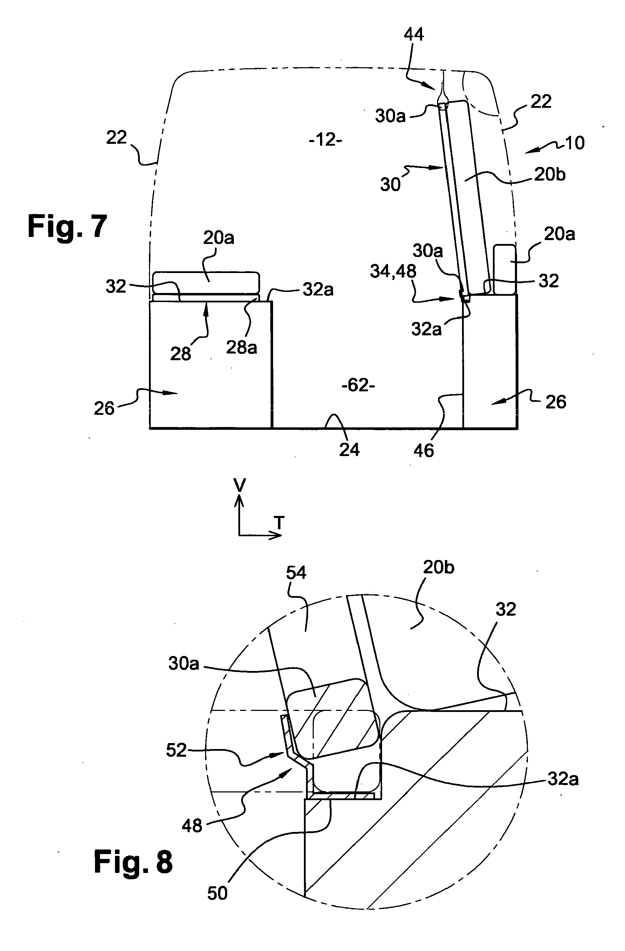

Les crochets 48 forment ainsi un rail longitudinal ouvert vers le haut, dans lequel une extrémité 30a du cadre mobile 30 est apte à être reçue, comme on peut le voir à la figure 7.

Selon une variante de réalisation, les moyens de maintien 34 comportent un seul crochet 48 formant un profilé longitudinal qui s'étend longitudinalement sur tout la longueur du bord interne 32a de la paroi supérieure 32.

Chaque crochet 48 comporte une base horizontale 50 qui est fixée sur le bord interne 32a de la paroi supérieure 32 et une portion verticale 52 de maintien s'étendant vers le haut depuis le bord d'extrémité transversale interne 50a de la base.

Chaque crochet 48 est réalisé de manière à recevoir une portion de l'armature 54 du cadre mobile 30 lorsqu'il est dans l'une ou l'autre des deux positions d'utilisation ou de rangement.

Pour cela, puisque la section des profilés est rectangulaire, comme on l'a dit précédemment, la distance entre la partie inférieure 52i de la portion verticale 52 du crochet 48 et la face longitudinale verticale 58 de la paroi supérieure 32 est globalement égale à la petite dimension du profilé formant l'armature 54 du cadre mobile 30, comme on peut le voir à la figure 8, pour que l'armature repose sur a base 50 de chaque crochet 48 lorsque le cadre 30 est en position horizontale de rangement, et pour limiter les mouvements transversaux du cadre mobile 30 lorsqu'il est en position horizontale.

Aussi, la partie supérieure 52s de la portion verticale 52 est repliée transversalement vers l'intérieur du compartiment 12, pour adapter la distance entre cette partie supérieure 52 et la face longitudinale verticale 58 de la paroi supérieure, à la grande dimension du profilé.

Les crochets 48 sont ainsi réalisés de manière qu'ils reçoivent une extrémité 30a du cadre mobile 30 lorsque le cadre mobile 30 est en position horizontale d'utilisation ou en position relevée de rangement. Par contre, et selon l'invention, le déplacement du cadre mobile 30 depuis la position horizontale vers la position relevée, implique de désolidariser l'extrémité 30a du cadre mobile 30 d'avec les crochets 48.

Il sera compris que la l'invention n'est pas limitée à cette seule forme des crochets 48, et que les crochets 48 peuvent par conséquent avoir une autre forme qui est adaptée à la forme du bord 30a du cadre mobile 30.

Par exemple, selon la variante de réalisation de l'invention pour laquelle la section des profilés est carrée, circulaire ou ovale, la portion verticale de chaque crochet est alors globalement droite, et s'étend entièrement dans un plan vertical longitudinal, ou alors la portion verticale 52 est cintrée pour permettre un pivotement du cadre mobile 30 dans le crochet 48.

Lorsque le cadre mobile 30 est en position de rangement, les moyens de maintien 34 peuvent permettre d'assurer par eux mêmes le maintien du cadre mobile 30 en position relevée. Par exemple, selon le mode de réalisation représenté aux figures 1 à 5, la plaque verticale 38 est réalisée de manière à empêcher tout basculement du cadre mobile 30 autour de son bord 30a inférieur.

Selon une variante de réalisation, le maintien du cadre mobile 30 en position de rangement est réalisé par l'intermédiaire de moyens d'accrochage 44, empêchant au cadre mobile 30 de se déplacer transversalement.

Ces moyens d'accrochage 44 sont par exemple des crochets ou des bandes qui sont aptes à envelopper une latte 56 ou une partie de l'armature 54 du cadre mobile 30.

Lorsque le cadre mobile 30 est en position de rangement, et comme on peut le voir aux figures 7 et 8, la partie centrale 20b du matelas 20 est positionnée sur la face supérieure 32 de l'élément de support 26 de droite en s'étendant globalement verticalement vers le haut depuis cette face supérieure 32, la partie centrale 20b du matelas 20 est ainsi située globalement entre le cadre mobile 30 et la paroi latérale de droite 22 du compartiment 12.

Selon le premier mode de réalisation de l'invention, la partie centrale 20b du matelas 20 est maintenue en position par des moyens d'accrochage 60, tels que des sangles, qui coopèrent avec son extrémité supérieure.

Selon le deuxième mode de réalisation de l'invention, la partie centrale 20b du matelas 20 est maintenue en position par l'intermédiaire du cadre mobile 30, qui la serre transversalement contre la paroi latérale 22 du compartiment 12.

Dans les modes de réalisation de l'invention qui viennent d'être décrits, les différentes parties 20a, 20b, 28, 30 du sommier 18 et du matelas 20 sont de formes et dimensions différentes.

Selon encore une autre variante de l'invention, le couchage 16 est réalisé symétriquement par rapport à un plan longitudinal vertical médian du véhicule. Ainsi, les parties latérales 20a du matelas 20 et les cadres fixes 28 sont globalement identiques.

De plus, selon cette variante, les moyens de maintien 34 sont aussi réalisés symétriquement par rapport à ce plan de symétrie, ce qui permet de déplacer le cadre mobile 30 vers une position de rangement pour laquelle le cadre mobile 30 est monté sur l'un ou l'autre des deux éléments de support 26.

L'invention propose ainsi un ensemble de couchage dont il est possible de modifier aisément la configuration. De plus, l'ensemble de couchage selon l'invention comporte un cadre mobile que l'on peut démonter entièrement sans utiliser d'outils.

Cela améliore la simplicité d'utilisation de cet ensemble de couchage, et cela limite aussi le nombre de petites pièces démontables qui peuvent être égarées.

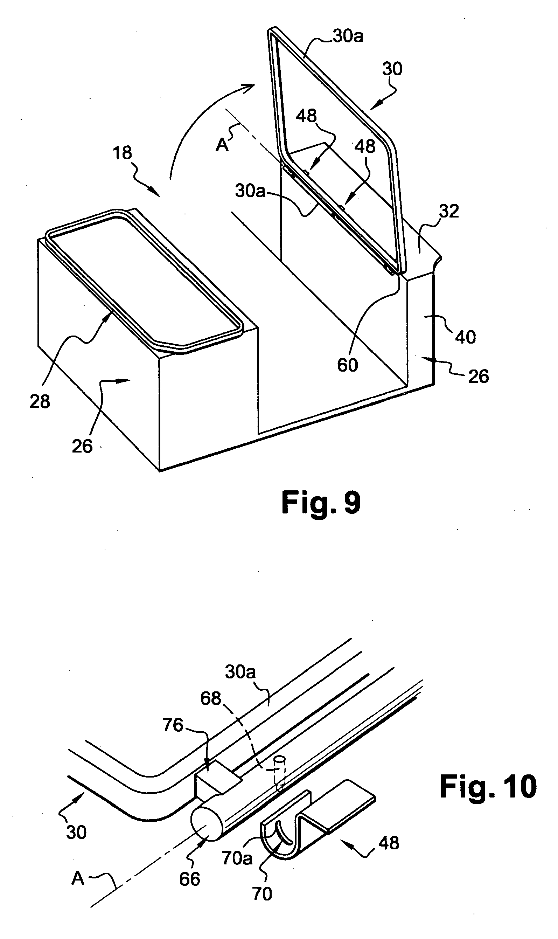

Les figures 9 et suivantes représentent un autre mode de réalisation de l'agencement selon l'invention pour lequel chaque crochet 48 est en forme d'arc de cercle ouvert vers le haut.

De plus, selon ce mode de réalisation, le cadre mobile 30 porte une barre longitudinale 66 qui est fixée à une extrémité transversale de l'armature 54 du cadre mobile 30 et qui est reçue dans les crochets 48.

La fixation de la barre 66 sur l'armature 54 est réalisée par des bras transversaux qui maintiennent la barre 66 transversalement à distance de l'armature 54.

La barre 66 est de section circulaire, et son diamètre est légèrement inférieur au diamètre interne des crochets 48.

La barre longitudinale 66 et les crochets 48 coopèrent pour former une articulation du cadre mobile 30 par rapport à l'élément de support 26 autour d'un axe A longitudinal principal de la barre 66.

Il est alors possible de déplacer le cadre mobile 30 depuis sa position horizontale en travers du passage 62, vers la position relevée de rangement, sans désolidariser le cadre mobile 30 d'avec l'élément de support 26.

De plus, puisque chaque crochet 48 est ouvert vers le haut, il est possible d'extraire la barre 66 hors des crochets 48 pour désolidariser entièrement le cadre mobile 30 d'avec les éléments de support 26, quelle que soit l'inclinaison du cadre mobile 30 par rapport à l'horizontale.

Selon une variante de réalisation, la barre longitudinale 66 porte des doigts radiaux 68 qui sont destinés à coopérer avec les crochets 48 pour le positionnement du cadre mobile par rapport à l'élément de support 26.

Pour cela, la barre 66 porte un nombre de doigts 68 identique au nombre de crochets 48, de manière que chaque doigt 68 est apte à coopérer avec un seul crochet 48.

De plus, chaque crochet 48 comporte une rainure 70 qui s'étend dans un plan vertical transversal, c'est-à-dire dans un plan radial par rapport à l'axe A longitudinal de la barre 66, et dans laquelle le doigt 68 associé au crochet 48 est destiné à être reçu.

La coopération des doigts 68 avec les rainures 70 permet de limiter l'amplitude de basculement du cadre mobile 30 par rapport à l'élément de support 26, empêchant ainsi que l'autre extrémité transversale 30a du cadre mobile 30 ne vienne buter contre un élément de rangement 14 lorsque l'utilisateur fait pivoter le cadre mobile 30.

Par exemple ici, chaque rainure 70 est conçue de manière telle que le doigt 68 associé vient en butée contre une première extrémité 70a de la rainure 70 lorsque le cadre mobile 30 a pivoté selon un angle inférieur à 90° autour de l'axe longitudinal A de la barre 66.

De plus, les doigts 68 et les rainures 70 réalisent un positionnement longitudinal du cadre mobile 30 par rapport à l'élément de support 26, et aussi ils empêchent tout mouvement longitudinal du cadre mobile 30 par rapport à l'élément de support 26, notamment lorsque le véhicule 10 se déplace.

Aussi, lorsque le cadre mobile 30 est en position relevée, chaque doigt 68 est en butée vers le haut contre la première extrémité 70a de la rainure 70, empêchant par conséquent à la barre 66 de se désolidariser des crochets 48. Le cadre mobile 30 est ainsi maintenu en position avec l'élément de support 26.

Selon encore une autre variante de réalisation de la barre 66, les doigts 68 sont mobiles radialement dans la barre longitudinale 66, de manière telle que les doigts 68 sont aptes à s'effacer radialement dans la barre 66.

La barre 66 comporte à cet effet plusieurs logements radiaux 74 dans chacun desquels un doigt 68 est monté mobile radialement et est apte à s'effacer radialement.

L'effacement de chaque doigt 68 dans son logement radial 74 s'effectue en exerçant une action sensiblement radiale sur l'extrémité libre 68a du doigt 68. Un organe de rappel 72 tel qu'ici un ressort, est agencé dans le logement radial 74 et exerce sur l'extrémité radialement interne 68b du doigt 68 un effort radial de rappel du doigt 68 vers sa position déployée.

Les doigts 68 sont aptes à s'effacer radialement dans leurs logements 74 lorsque la barre 66 est introduite dans les crochets, et lorsque les doigts 68 ne sont pas en face des rainures 70, selon le mouvement d'introduction du cadre mobile 30 sur l'élément de support 26.

C'est par exemple le cas lorsque le cadre mobile 30 est décalé longitudinalement par rapport à l'élément de support 26.

Dans ce cas, chaque doigt 68 est en appui radial contre une face en vis-à-vis d'un crochet 48. L'utilisateur déplace alors le cadre mobile 30 longitudinalement par rapport à l'élément de support 26 jusqu'à ce les doigts 68 soient situés longitudinalement au niveau des rainures 70.

Lorsqu'ils sont au niveau des rainures 70, les doigts 68 se déploient alors, sous l'action des organes de rappel 72.

Un autre cas pour lequel les doigts s'effacent radialement dans la barre 66 a lieu lors de l'engagement de la barre 66 dans les crochets 48, et que le cadre mobile 30 est sensiblement vertical.

Dans ce cas, les doigts 68 viennent en appui contre l'extrémité supérieure libre des crochets 48.

L'extrémité libre 68a de chaque doigt 68 est chanfreinée ou arrondie, pour coopérer avec le bord du crochet 48 de manière à entraîner le doigt 68 vers sa position rétractée.

L'extrémité libre de chaque crochet 48 est conformée pour favoriser le déplacement du doigt 68 vers sa position rétractée, par exemple elle est repliée transversalement vers l'extérieur, formant une rampe sur laquelle l'extrémité libre 68a du doigt 68 s'appuie.

Selon encore une autre variante de réalisation (non représentée) de l'articulation du cadre mobile 30 par rapport à l'élément de support 26, la barre 66 est apte à être reçue dans un seul crochet 48 qui s'étend longitudinalement sur globalement toute la longueur de l'élément de support 26. Ce crochet 48 unique coopère avec tous les doigts 68 de la barre 66, il comporte à cet effet les rainures 70 qui sont associées aux doigts 68.

L'addition d'une barre longitudinale 66 au cadre mobile 30 permet à l'utilisateur de déplacer le cadre mobile 30 entre sa position de repos et sa position relevée en faisant pivoter le cadre mobile 30 autour de l'axe longitudinal A de la barre 66.

La barre permet aussi de désolidariser complètement le cadre mobile 30 d'avec l'élément de support 26 selon un mouvement relativement aisé.

Lorsque le cadre mobile 30 est en position relevée, des moyens d'accrochage 44 tels que des sangles et/ou des crochets retiennent l'extrémité du cadre mobile 30, qui est alors la plus haute verticalement.

## Revendications

1. Agencement d'un ensemble de couchage (16) dans un compartiment de véhicule automobile (10), qui comporte un sommier (18) horizontal comportant au moins deux cadres (28, 30) alignés transversalement, et qui sont montés sur des éléments inférieurs de support (26) agencés à chaque extrémité transversale du sommier (18), un cadre (30) du sommier (18) étant mobile par rapport à l'au moins un autre cadre (28) du sommier (18) et par rapport aux éléments de support (26) entre une position horizontale dans laquelle il est en appui sur chaque élément de support (26), et au moins une position de rangement dans laquelle le cadre mobile (30) s'étend globalement dans un plan longitudinal vertical,
le cadre mobile (30) étant apte à être désolidarisé entièrement des éléments de support (26) pour son déplacement entre la position horizontale et la position de rangement, et/ou pour son déplacement entre la position horizontale et une position démontée de rangement hors du véhicule (10),
le cadre mobile (30) étant monté sur une paroi supérieure (32) horizontale d'un élément de support (26) lorsqu'il est en position de rangement, **caractérisé en ce que** cette paroi porte au moins un crochet (48) qui est ouvert vers le haut et qui est apte à recevoir une extrémité (30a) du cadre mobile (30) lorsque le cadre mobile (30) est dans sa position de rangement.

2. Agencement selon la revendication précédente, **caractérisé en ce que** ledit crochet (48) s'étend longitudinalement globalement sur la longueur du bord (32a) d'extrémité transversale interne de la paroi supérieure (32).

3. Agencement selon la revendication 1 ou 2, **caractérisé en ce que** ladite extrémité (30a) du cadre mobile (30) est articulée par rapport audit au moins un crochet (48) autour d'un axe (A) longitudinal, pour déplacer directement le cadre mobile (30) depuis la position de repos vers la position de rangement.

4. Agencement selon la revendication précédente, **caractérisé en ce que** ladite extrémité (30a) du cadre mobile (30) porte une barre (66) longitudinale qui est reçue à rotation dans ledit au moins un crochet (48) pour réaliser l'articulation du cadre mobile (30) par rapport à l'élément de support (26) et **en ce que** ladite barre (66) longitudinale est apte à être sortie hors dudit au moins un crochet (48) pour la désolidarisation du cadre mobile (30) d'avec l'élément de support (26).

5. Agencement selon la revendication précédente, **caractérisé en ce que** ladite barre (66) longitudinale porte au moins un doigt (68) radial par rapport à l'axe (A) longitudinal, et qui coopère avec au moins une rainure (70) réalisée dans ledit au moins un crochet (48), ladite rainure (70) s'étendant dans un plan radial par rapport audit axe (A) longitudinal.

6. Agencement selon la revendication précédente, **caractérisé en ce que** ledit au moins un doigt (68) est apte à venir en butée conte une extrémité de la rainure (70) lorsque le cadre mobile (30) est en position de rangement.

7. Agencement selon la revendication 5 ou 6, **caractérisé en ce que** ledit au moins un doigt (68) est monté coulissant dans un logement (74) radial réalisé dans la barre (66) longitudinale, et est apte à s'effacer radialement à l'intérieur dudit logement (74) radial.

8. Agencement selon l'une quelconque des revendications 5 à 7, **caractérisé en ce que** la barre (66) comporte plusieurs doigts (68) répartis longitudinalement le long de la barre (66), et **en ce que** ledit au moins un crochet (48) comporte un nombre de rainures (70) identique au nombre de doigts (68).

9. Agencement selon la revendication précédente, **caractérisé en ce que** l'élément de support porte plusieurs crochets (48) dont le nombre de crochets (48) est identique au nombre de doigts (68) portés par la barre (66), et **en ce que** chaque crochet (48) comporte une rainure (70) qui est apte à recevoir l'un des doigts (68).

10. Agencement selon la revendication 1, **caractérisé en ce que** le cadre mobile (30) est apte à être désolidarisé des éléments de support (26) par un premier mouvement consistant à soulever le cadre mobile (30), puis à être déplacé vers sa position de rangement par un deuxième mouvement d'engagement du cadre mobile (30) dans des moyens de maintien (34) du cadre (30) dans la position de rangement.

11. Agencement selon la revendication précédente, **caractérisé en ce que** lors de son déplacement vers la position de rangement, le cadre mobile (30) est basculé globalement autour d'un axe longitudinal.

12. Agencement selon la revendication précédente, **caractérisé en ce que** lors de son déplacement vers la position de rangement, le cadre mobile (30) est déposé dans les moyens de maintien (34) postérieurement à son basculement.

13. Agencement selon la revendication précédente, **caractérisé en ce qu'**un élément de support (26) porte les moyens de maintien (34) du cadre mobile (30) dans sa position de rangement.

14. Agencement selon la revendication précédente, **caractérisé en ce que** le cadre mobile (30) est accolé contre une paroi longitudinale verticale (46) dudit élément de support (26) lorsqu'il est en position de rangement.

15. Agencement selon la revendication précédente, **caractérisé en ce que** les moyens de maintien (34) comportent au moins une plaque longitudinale verticale (38) qui est décalée transversalement par rapport à ladite paroi longitudinale verticale (46) de l'élément de support (26).

16. Agencement selon la revendication précédente, **caractérisé en ce que** la plaque (38) est agencée au niveau d'un coin inférieur de la paroi longitudinale verticale (46) de l'élément de support (26) et s'étend verticalement vers le haut depuis le plancher (24) du compartiment (12).

17. Agencement selon la revendication précédente, **caractérisé en ce que** les moyens de maintien (34) comportent deux plaques longitudinales verticales (38) agencées au niveau de chaque coin inférieur de la paroi longitudinale verticale (46).

18. Agencement selon la revendication précédente, **caractérisé en ce que** la plaque longitudinale verticale (38) est reliée à l'élément de support (26) par une aile transversale verticale (42) qui est fixée à une paroi verticale transversale (40) de l'élément de support (26).

19. Agencement selon l'une quelconque des revendications précédentes, **caractérisé en ce que** le cadre mobile (30) est maintenu en position de rangement par les moyens de maintien (34).

20. Agencement selon l'une quelconque des revendications 1 à 18, **caractérisé en ce que** le cadre mobile (30) est maintenu en position de rangement par des moyens d'accrochage (44).

21. Agencement selon l'une quelconque des revendications précédentes, **caractérisé en ce qu'**il présente une symétrie selon un plan longitudinal vertical médian du compartiment (12) arrière.

## Claims

1. Arrangement of a bedding assembly (16) in a motor vehicle compartment (10), which comprises a horizontal bed base (18) comprising at least two frames (28, 30) which are aligned transversely, and are fitted on lower support elements (26) arranged at each transverse end of the bed base (18), a frame (30) of the bed base (18) being mobile relative to the at least one other frame (28) of the bed base (18) and relative to the support elements (26), between a horizontal position in which it is supported on each support element (26), and at least one storage position in which the mobile frame (30) extends globally on a vertical longitudinal plane, the mobile frame (30) being able to be separated entirely from the support elements (26) in order to be displaced between the horizontal position and the storage position, and/or in order to be displaced between the horizontal position and a dismantled storage position outside the vehicle (10), the mobile frame (30) being fitted on a horizontal upper wall (32) of a support element (26) when it is in the storage position, **characterised in that** this wall bears at least one hook (48) which is open at the top, and can receive an end (30a) of the mobile frame (30), when the mobile frame (30) is in its storage position.

2. Arrangement according to the preceding claim, **characterised in that** the said hook (48) extends longitudinally globally along the length of the inner transverse end edge (32a) of the upper wall (32).

3. Arrangement according to claim 1 or 2, **characterised in that** the said end (30a) of the mobile frame (30) is articulated relative to the said at least one hook (48), around a longitudinal axis (A), in order to displace the mobile frame (30) directly from the position of rest to the position of storage.

4. Arrangement according to the preceding claim, **characterised in that** the said end (30a) of the mobile frame (30) supports a longitudinal bar (66) which is received such as to rotate in the said at least one hook (48), in order to provide the articulation of the mobile frame (30) relative to the support element (26), and **in that** the said longitudinal bar (66) can be extracted from the said at least one hook (48) in order to separate the mobile frame (30) from the support element (26).

5. Arrangement according to the preceding claim, **characterised in that** the said longitudinal bar (66) bears at least one finger (68) which is radial relative to the longitudinal axis (A), and which cooperates with at least one groove (70) provided in the said at least one hook (48), the said groove (70) extending on a plane which is radial relative to the said longitudinal axis (A).

6. Arrangement according to the preceding claim, **characterised in that** the said at least one finger (68) can abut an end of the groove (70) when the mobile frame (30) is in the storage position.

7. Arrangement according to claim 5 or 6, **characterised in that** the said at least one finger (68) is fitted such as to slide in a radial receptacle (74) provided in the longitudinal bar (66), and can be concealed radially within the said radial receptacle (74).

8. Arrangement according to any one of claims 5 to 7, **characterised in that** the bar (66) comprises a plurality of fingers (68) which are distributed longitudinally along the bar (66), and **in that** the said at least one hook (48) comprises a number of grooves (70) which is identical to the number of fingers (68).

9. Arrangement according to the preceding claim, **characterised in that** the support element supports a plurality of hooks (48), the number of hooks (48) of which is identical to the number of fingers (68) supported by the bar (66), and **in that** each hook (48) comprises a groove (70) which can receive one of the fingers (68).

10. Arrangement according to claim 1, **characterised in that** the mobile frame (30) can be separated from the support elements (26) by a first movement consisting of raising the mobile frame (30), and can then be displaced to its storage position by a second movement of engagement of the mobile frame (30) in means (34) for retention of the frame (30) in the storage position.

11. Arrangement according to the preceding claim, **characterised in that**, during its displacement to the storage position, the mobile frame (30) is tilted globally around a longitudinal axis.

12. Arrangement according to the preceding claim, **characterised in that**, during its displacement to the storage position, the mobile frame (30) is placed in retention means (34), after having been tilted.

13. Arrangement according to the preceding claim, **characterised in that** a support element (26) supports the means (34) for retention of the mobile frame (30) in its storage position.

14. Arrangement according to the preceding claim, **characterised in that** the mobile frame (30) is placed against a vertical longitudinal wall (46) of the said support element (26) when it is in the storage position.

15. Arrangement according to the preceding claim, **characterised in that** the retention means (34) comprise at least one vertical longitudinal plate (38) which is offset transversely relative to the said vertical longitudinal wall (46) of the support element (26) .

16. Arrangement according to the preceding claim, **characterised in that** the plate (38) is arranged at the level of a lower corner of the vertical longitudinal wall (46) of the support element (26), and extends vertically upwards from the floor (24) of the compartment (12).

17. Arrangement according to the preceding claim, **characterised in that** the retention means (34) comprise two vertical longitudinal plates (38) which are arranged at the level of each lower corner of the vertical longitudinal wall (46).

18. Arrangement according to the preceding claim, **characterised in that** the vertical longitudinal plate (38) is connected to the support element (26) by a vertical transverse wing (42) which is secured to a transverse vertical wall (40) of the support element (26).

19. Arrangement according to any of the preceding claims, **characterised in that** the mobile frame (30) is retained in the storage position by the retention means (34) .

20. Arrangement according to any one of claims 1 to 18, **characterised in that** the mobile frame (30) is retained in the storage position by coupling means (44) .

21. Arrangement according to any one of the preceding claims, **characterised in that** it has symmetry according to a median vertical longitudinal plane of the rear compartment (12).

## Patentansprüche

1. Anordnung einer Schlafgelegenheit (16) in einem Bereich eines Kraftfahrzeugs (10), die einen horizontalen Bettrost (18) besitzt, der mindestens zwei Rahmen (28, 30) aufweist, die quer ausgerichtet sind, und die an unteren Tragelementen (26) montiert sind, welche sich an jedem quer verlaufenden Ende des Bettrostes (18) befinden, wobei ein Rahmen (30) des Bettrostes (18) gegenüber mindestens einem anderen Rahmen (28) des Bettrostes (18) und gegenüber den Tragelementen (26) beweglich ist, und zwar zwischen einer horizontalen Position, in der er sich an jedem Tragelement (26) abstützt, und mindestens einer Position des Verstauens oder der Unterbringung, in der der bewegliche Rahmen (30) im allgemeinen in einer vertikalen Längsebene verläuft,
wobei der bewegliche Rahmen (30) von den Tragelementen (26) vollständig getrennt werden kann, um ihn zwischen der horizontalen Position und der Position des Verstauens oder Unterbringens zu verschieben, und / oder um ihn zwischen der horizontalen Position und einer demontierten Position der Unterbringung oder des Verstauens außerhalb des Fahrzeuges (10) zu bewegen,
wobei der bewegliche Rahmen (30) an einer oberen (32) horizontalen Wand eines Tragelementes (26) montiert ist, wenn er sich in der Position des Verstauens bzw. der Unterbringung befindet, **dadurch gekennzeichnet, dass** diese Wand mindestens einen Haken (48) besitzt, der nach oben offen ist, und der ein Ende (30a) des beweglichen Rahmens (30) aufnehmen kann, wenn sich der bewegliche Rahmen (30) in seiner Position des Verstauens bzw. der Unterbringung befindet.

2. Anordnung nach dem vorhergehenden Anspruch, **dadurch gekennzeichnet, dass** sich der Haken (48) im allgemeinen in Längsrichtung entlang der Länge der Kante (32a) des inneren, quer verlaufenden Endes der oberen Wand (32) erstreckt.

3. Anordnung nach Anspruch 1 oder 2, **dadurch gekennzeichnet, dass** das Ende (30a) des beweglichen Rahmens (30) gegenüber mindestens einem Haken (48) um eine Längsachse (A) gelenkig angebracht ist, um den beweglichen Rahmen (30) direkt von der Ruhestellung in die Position des Verstauens oder der Unterbringung zu bewegen.

4. Anordnung nach dem vorhergehenden Anspruch, **dadurch gekennzeichnet, dass** das Ende (30a) des beweglichen Rahmens (30) einen Längsstab (66) besitzt, der in dem mindestens einen Haken (48) drehend aufgenommen wird, um die Anlenkung des beweglichen Rahmens (30) gegenüber dem Tragelement (26) herzustellen, und dass der Längsstab (66) aus dem mindestens einen Haken (48) herausgezogen werden kann, um den beweglichen Rahmen (30) von dem Tragelement (26) zu trennen.

5. Anordnung nach dem vorhergehenden Anspruch, **dadurch gekennzeichnet, dass** der Längsstab (66) mindestens einen radialen Zapfen (68) gegenüber der Längsachse (A) besitzt, der mit mindestens einer Einkerbung (70) zusammenwirkt, die in dem mindestens einen Haken (48) hergestellt ist, wobei die Einkerbung (70) in einer radialen Ebene zu der Längsachse (A) verläuft.

6. Anordnung nach dem vorhergehenden Anspruch, **dadurch gekennzeichnet, dass** der mindestens eine Zapfen (68) gegen ein Ende der Einkerbung (70) drücken kann, wenn sich der bewegliche Rahmen (30) in der Position der Unterbringung oder des Verstauens befindet.

7. Anordnung nach Anspruch 5 oder 6, **dadurch gekennzeichnet, dass** der mindestens eine Zapfen (68) verschiebbar in einer radialen Aufnahme (74) montiert ist, die in dem Längsstab (66) hergestellt ist, und radial im Inneren der radialen Aufnahme (74) verschwinden kann.

8. Anordnung nach einem der Ansprüche 5 bis 7, **dadurch gekennzeichnet, dass** der Stab (66) mehrere Zapfen (68) aufweist, die der Länge entlang dem Stab (66) verteilt sind, und dass der mindestens eine Haken (48) eine Anzahl von Einkerbungen (70) aufweist, die mit der Anzahl von Zapfen (68) identisch ist.

9. Anordnung nach dem vorhergehenden Anspruch, **dadurch gekennzeichnet, dass** das Tragelement mehrere Haken (48) aufweist, deren Anzahl mit der Anzahl von Zapfen (68) identisch ist, die sich an dem Stab (66) befinden, und dass der Haken (48) eine Einkerbung (70) besitzt, die einen der Zapfen (68) aufnehmen kann.

10. Anordnung nach Anspruch 1, **dadurch gekennzeichnet, dass** der bewegliche Rahmen (30) durch eine erste Bewegung von den Tragelementen (26) gelöst werden kann, indem der bewegliche Rahmen (30) angehoben wird und anschließend zu seiner Position der Unterbringung oder des Verstauens hin bewegt wird, und zwar durch eine zweite Bewegung des Eingreifens des beweglichen Rahmens (30) in Halteelemente (34) des Rahmens (30) in der Position der Unterbringung oder des Verstauens.

11. Anordnung nach dem vorhergehenden Anspruch, **dadurch gekennzeichnet, dass** der bewegliche Rahmen (30) während seiner Bewegung zu der Position der Unterbringung oder des Verstauens hin im allgemeinen um eine Längsachse herum gekippt wird.

12. Anordnung nach dem vorhergehenden Anspruch, **dadurch gekennzeichnet, dass** der bewegliche Rahmen (30) während seiner Bewegung zu der Position der Unterbringung oder des Verstauens hin nach dem Kippen in den Halteelementen (34) abgesetzt wird.

13. Anordnung nach dem vorhergehenden Anspruch, **dadurch gekennzeichnet, dass** ein Tragelement (26) die Halteelemente (34) des beweglichen Rahmens (30) in seiner Position des Verstauens oder der Unterbringung hält.

14. Anordnung nach dem vorhergehenden Anspruch, **dadurch gekennzeichnet, dass** der bewegliche Rahmen (30) an einer vertikalen Längswand (46) des Tragelementes (26) anliegt, wenn er sich in der Position der Unterbringung oder des Verstauens befindet.

15. Anordnung nach dem vorhergehenden Anspruch, **dadurch gekennzeichnet, dass** die Halteelemente (34) mindestens eine vertikale Längsplatte (38) besitzen, die gegenüber der vertikalen Längswand (46) des Tragelementes (26) quer verschoben ist.

16. Anordnung nach dem vorhergehenden Anspruch, **dadurch gekennzeichnet, dass** die Platte (38) im Bereich einer unteren Ecke der vertikalen Längswand (46) des Tragelementes (26) angeordnet ist, und von dem Boden (24) des Fahrzeugbereichs (12) vertikal nach oben verläuft.

17. Anordnung nach dem vorhergehenden Anspruch, **dadurch gekennzeichnet, dass** die Halteelemente (34) zwei vertikale Längsplatten (38) aufweisen, die im Bereich jeder unteren Ecke der vertikalen Längswand (46) angeordnet sind.

18. Anordnung nach dem vorhergehenden Anspruch, **dadurch gekennzeichnet, dass** die vertikale Längsplatte (38) über einen vertikalen Querschenkel (42) mit dem Tragelement (26) verbunden ist, der an einer vertikalen Querwand (40) des Tragelementes (26) befestigt ist.

19. Anordnung nach einem der vorhergehenden Ansprüche, **dadurch gekennzeichnet, dass** der bewegliche Rahmen (30) durch die Halteelemente (34) in der Position der Unterbringung oder des Verstauens gehalten wird.

20. Anordnung nach einem der Ansprüche 1 bis 18, **dadurch gekennzeichnet, dass** der bewegliche Rahmen (30) durch Einhängelemente (44) in der Position der Unterbringung oder des Verstauens gehalten wird.

21. Anordnung nach einem der vorhergehenden Ansprüche, **dadurch gekennzeichnet, dass** sie entsprechend einer längsverlaufenden, vertikalen Mittelebene des hinteren Fahrzeugbereichs (12) eine Symmetrie aufweist.
